# EUROPEAN PATENT APPLICATION

(11) **EP 2 960 538 A1**
(43) Date of publication of application: **30.12.2015**
(21) Application number: 14754781.4
(22) Date of filing: 18.02.2014
(51) Int. Cl.: F16D 65/28, F16F 1/32

(54) **MAGNETIC BRAKE**

(30) Priority: 19.02.2013 KR 20130017326
(71) Applicant: Koh Young Technology Inc., Seoul 153-706 (KR); Industry-University Cooperation Foundation Hanyang University ERICA Campus, Gyeonggi-do (KR)
(72) Inventor: YI, Byung-Ju, Bucheon-si Gyeonggi-do 420-815 (KR); SEO, Jong-Tae, Ansan-si Gyeonggi-do 426-896 (KR)
(74) Representative: Zardi, Marco
(86) International application number: PCT/KR2014/001281
(87) International publication number: WO 2014/129777

(57) **Abstract**

A magnetic brake capable of stopping smoothly the rotating body and as well as minimizing a braking impact applied to the rotating body through gradually increasing a frictional force generated between a disk portion and a pad portion is disclosed. The magnetic brake is usefully applied to a joint portion of a robot arm which requires precise controlling since it minimizes a braking impact applied to the rotating body and smoothly stops the rotating body with a very simple and compact structure. Also, the magnetic brake is manufactured in a simple and compact structure, therefore a restriction of installing space is minimized, and various devices to which the magnetic brake is applied can be smaller and lighter.

## Description

### TECHNICAL FIELD

Exemplary embodiments of the present invention relate to a magnetic brake. More particularly, exemplary embodiments of the present invention relate to a magnetic brake capable of putting on a brake to a rotating body.

### BACKGROUND

In general, a mechanical brake and a magnetic brake are most widely used to put on a brake to a rotating body. The mechanical brake having mechanical structure puts on a brake to a rotary motion through a frictional force by contacting a brake pad to the rotating body and, the magnetic brake using magnetism puts on a brake to a rotary motion through a frictional force by contacting a brake pad to the rotating body.

The magnetic brake puts on a brake to rotary motion of the rotating body by applying a voltage to a pad portion formed in an electromagnetic, the disk portion of the rotating body is moved to the pad portion, making a contact and generating a frictional force between the pad portion and the disk portion.

However, in a conventional magnetic brake as described above, when a voltage is applied to a pad formed by an electromagnetic, the whole portion of the pad portion is contacted to the whole portion of the disk portion at the same time, a large frictional force is generated in a moment, and therefore, a big braking impact is applied to the rotating body, as well as, there is problem that the rotating body is stopped in a quick brake without being stopped gradually and smoothly.

Therefore, conventional magnetic brake as described above is actually impossible to apply to an industrial robot arm which requires a precise control and a surgical robot arm which requires more precise control.

### SUMMARY

Therefore, the technical problem of the present invention is to provide a magnetic brake in which a frictional force is gradually generated between a disk portion and a pad portion during stopping a rotating body, and therefore, a braking impact applied to the rotating body is minimized and, at the same time, the rotating body is stopped smoothly.

According to an embodiment of the present invention, a magnetic brake includes a disk portion which is installed on a rotating body to rotate in connection with the rotating body, a pad portion which is disposed away from the disk portion at a predetermined interval and formed by an electromagnetic capable of adjusting a voltage and, the pad portion stops the rotating body by generating a frictional force by contacting the disk portion to the pad portion when a voltage is applied, and a buffer means which smoothly stops the rotating body by gradually increasing the frictional force between the disk portion and the pad portion through gradually increasing a contact surface between the disk portion and the pad portion when the disk portion gets in a contact with the pad portion.

In one embodiment, the buffer means is installed on the disk portion or the pad portion, and may be an arc shaped in which a contact surface is gradually increased outwardly from a center portion when the disk portion gets in contact with the pad portion.

In other embodiment, the buffer means may be a leaf spring which is elastically interposed between the disk portion and the pad portion, and the leaf spring is pressed by the disk portion and the pad portion and gradually increases the contact surface when the disk portion gets in contact with the pad portion.

Meanwhile, the disk portion may be an electromagnet capable of adjusting a voltage, arranged to face the pad portion, and has a polarity opposite to a polarity of the pad portion.

In another embodiment according to the present invention, a magnetic brake may include a disk portion which is installed on a rotating body to rotate in connection with the rotating body, and a pad portion in which at least two electromagnets arranged forming a concentric circle and capable of adjusting a voltage independently, disposed away from the disk portion at a predetermined interval, a voltage is applied to each of the electromagnets at a predetermined interval, each of the electromagnets is gradually contacted with the disk portion at a predetermined interval, a frictional force is gradually increased between the disk portion and the pad portion, and therefore, the pad portion smoothly stops the rotating body.

In one embodiment, a voltage may be applied gradually from the electromagnet positioned in a center of the pad portion to the electromagnet positioned in the outermost of the pad portion such that the pad portion gets in contact with the disk portion from the electromagnet positioned in a center of the pad portion to the electromagnet positioned in the outermost of the pad portion.

In other embodiment, a voltage may be applied gradually from the electromagnet positioned in the outermost of the pad portion to the electromagnet positioned in a center of the pad portion such that the pad portion gets in contact with the disk portion from the electromagnet positioned in the outermost of the pad portion to the electromagnet positioned in a center of the pad portion.

Meanwhile, different voltage may be applied to each of the electromagnets which form the pad portion.

In one embodiment, voltage may gradually be increased from the electromagnet positioned in a center of the pad portion to the electromagnet positioned in the outermost of the pad portion.

In another embodiment, a voltage may gradually be increased from the electromagnet positioned in the outermost of the pad portion to the electromagnet positioned in a center of the pad portion.

Thus, a magnetic brake according to an embodiment of the present invention gradually increases a frictional force generated between the pad portion and the disk portion by gradually increasing a contact surface between the pad portion and the disk portion through a simple structured buffer means, or gradually increases a frictional force generated between the pad portion and the disk portion by arranging at least two electromagnets forming a concentric circle and capable of independently adjusting a voltage, gradually applying a voltage to each of the electromagnets at a predetermined interval ,and therefore, each of the electromagnets is gradually in contact with the disk portion at a predetermined interval.

Accordingly, a magnetic brake according to an embodiment of the present invention minimizes a braking impact applied to a rotating body and stops smoothly the rotating body, and therefore, it may be used in a robot arm which requires precise controlling, a restriction of installing space is minimized by manufacturing in a simple structure, and as well as, various devices to which the magnetic brake is applied may be smaller and lighter.

### BRIEF DESCRIPTION OF THE DRAWINGS

**FIG.1** is a schematic diagram of a magnetic brake according to a first embodiment of the present invention.
**FIG. 2** is another schematic diagram of a magnetic brake according to a first embodiment of the present invention.
**FIG. 3** is a schematic diagram of a magnetic brake according to a second embodiment of the present invention.
**FIG. 4** is another schematic diagram of a magnetic brake according to a second embodiment of the present invention.
**FIG. 5** is a schematic diagram of a magnetic brake according to a third embodiment of the present invention.
**FIG. 6** is a front view explaining a pad structure.

### DETAILED DESCRIPTION

The present invention is described more fully hereinafter with reference to the accompanying drawings, in which example embodiments of the present invention are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity.

It will be understood that, although the terms first, second, third etc. may be used herein to describe various elements, components, regions, layers and/or sections, these elements, components, and/or sections should not be limited by these terms. These terms are only used to distinguish one element, component, region, layer or section from another region, layer or section. Thus, a first element, component, or section discussed below could be termed a second element, component, or section without departing from the teachings of the present invention.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, with reference to the drawings, preferred embodiments of the present invention will be described in detail.

### <First embodiment>

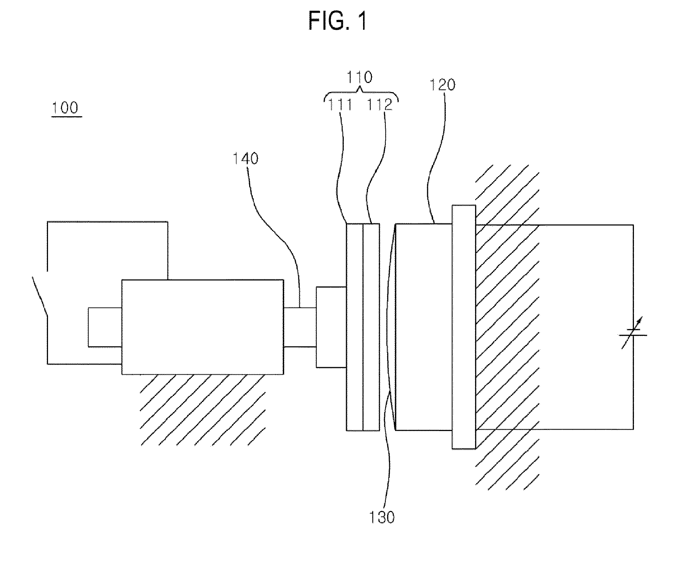

Referring to **FIG. 1****,** a magnetic brake according to a first embodiment of the present invention is explained.

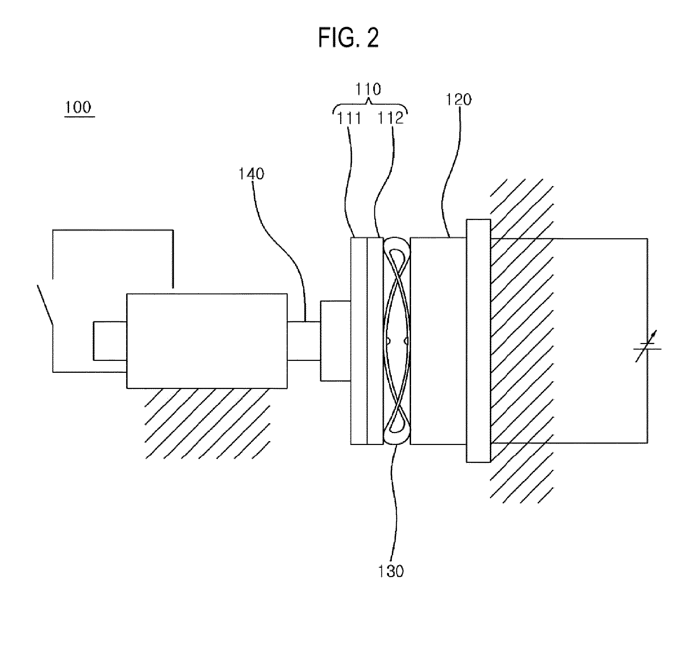

**FIG.1** is a schematic diagram of a magnetic brake according to a first embodiment of the present invention, and **FIG. 2** is another schematic diagram of a magnetic brake according to a first embodiment of the present invention.

Referring to **FIGS. 1** and **2****,** a magnetic brake 100 according to a first embodiment of the present invention includes a disk portion 110, a pad portion 120, and a buffer means 130.

The disk portion 110 is installed on a rotating body 140 and rotates in connection with the rotating body 140. Herein, it may be preferable to slidingly install the disk portion 110 to the rotating body 140 such that the disk portion 110 is moved to the pad portion 120 according to the rotating body 140 when a voltage is applied to the pad portion 120.

The disk portion 110 includes a disk 111 installed on the rotating body 140 slidingly to an axial direction of the rotation body 140, and a disk pad 112 installed on the disk 111 facing the pad portion 120. Herein, it may be preferable to replaceably install the disk pad 112 on the disk 111 to replace when the disk pad is worn down after using predetermined period.

The pad portion 120 is disposed away from the disk portion at a predetermined interval. Such a pad portion 120 is formed by an electromagnet capable of adjusting a voltage. Thus, when a voltage is applied to the pad portion 120, the disk portion 110 slidingly moves to the pad portion 120 according to the rotating body 140, and the rotating body 140 is stopped by a frictional force generated through a contact between the pad portion 120 and the disk portion 110. For example, the pad portion 120 formed by an electromagnet is capable of adjusting an applied voltage from 5V to 10V and a frictional force generated between the disk portion 110 and the pad portion 120 may be adjusted through adjusting the voltage

The buffer means 130 gradually increases a contact surface between the disk portion 110 and the pad portion 120 when the disk portion 110 gets in contact with the pad portion 120, and the rotating body 140 is stopped by gradually increasing a frictional force between the disk portion 110 and the pad portion 120. In other words, the buffer means 130 gradually increases a frictional force generated between the disk portion 110 and the pad portion 120, a rotating speed of the rotating body 140 is gradually reduced, and therefore, a braking impact of the rotating body 140 is buffered and the rotating body 140 is stopped smoothly.

For example, a buffer pad with arc shape may be used as the buffer means 130 and is installed on the disk portion 110 or the pad portion 120 as shown in **FIG. 1****.** Meanwhile, it may be preferable to install the buffer pad used for buffer means 130 on the disk portion 110 or the pad portion 120 such that it is possible to change the buffer pad when it is worn down after using a predetermined period. The buffer pad used for the buffer means 130 is formed in an arc shape such that the disk portion 110 gets in contact with the pad portion 120, initially, a convex portion which is a center portion of the pad buffer gets in contact, as the disk portion 110 is gradually moved in the pad portion, the buffer pad is pressed by the disk portion 110 and the pad portion 120, the shape of the buffer pad is changed, the buffer pad gradually gets in contact to the disk portion 110 or the pad portion 120 from the center portion to the outermost portion, and a frictional force generated between the disk portion 110 and the pad portion 120 is gradually increased since the contact surface is increased. Thus, it is possible to stop the rotating body 140 smoothly by buffering a braking impact since a rotating speed of the rotating body 140 is gradually reduced. Herein, it may be preferable to install the buffer means 130 on the pad portion 120 to the disk portion 110.

In other embodiment, the buffer means 130 may be a leaf spring elastically interposed between the disk portion 110 and the pad portion 120 as shown in **FIG. 2****.** The leaf spring used for the buffer means 130 is pressed by the disk portion 110 and the pad portion 120 when the disk portion 110 and the pad portion 120 get in contact with each other, a contact surface between the leaf spring and the disk portion 110 and the pad portion 120 is gradually increased, and as a result, a frictional force between the disk portion 110 and the pad portion 120 is gradually increased. Therefore, it is possible to stop the rotating body 140 smoothly by buffering a braking impact since a rotating speed of the rotating body 140 is gradually reduced.

Referring again to **FIGS. 1** and **2****,** an operating process and an operating effect of a magnetic brake according to the first embodiment of the present invention are explained below.

Referring to **FIGS. 1** and **2****,** in order to stop a rotating body 140 using a magnetic brake 100 according to the first embodiment of the present invention, first, a voltage is applied to the pad portion 120 which is formed in electromagnet.

When a voltage is applied to the pad portion 120, an attraction is generated between the pad portion 120 and the disk portion 110, and the disk portion 120 disposed away from the pad portion 120 at a predetermined interval is towed to the pad portion 120 and is slidingly moved to the pad portion 120 according to the rotating body 140.

In the beginning, a partial portion of the buffer means 130 installed on the pad portion 120 or the disk portion 110 gets in contact with the disk portion 110 or the pad portion 120 when the disk portion 110 at a predetermined interval is slidingly moved to the pad portion 120 according to the rotating body 140.

After, when the disk portion 110 is further moved to the pad portion 120 by an attraction generated between the disk portion 110 and the pad portion 120, the shape of the buffer means 130 is changed as the buffer means 130 is pressed by the disk portion 110 and the pad portion 120, a contact surface between the duffer means 130 and the disk portion 110 or the pad portion 120 is gradually increased, and as a result, a frictional force generated between the disk portion 110 and the pad portion 120 is gradually increased. Therefore, there is an advantage that it is possible to stop the rotating body 140 smoothly by minimizing a braking impact through reducing gradually a rotating speed of the rotating body 140.

### < Second embodiment>

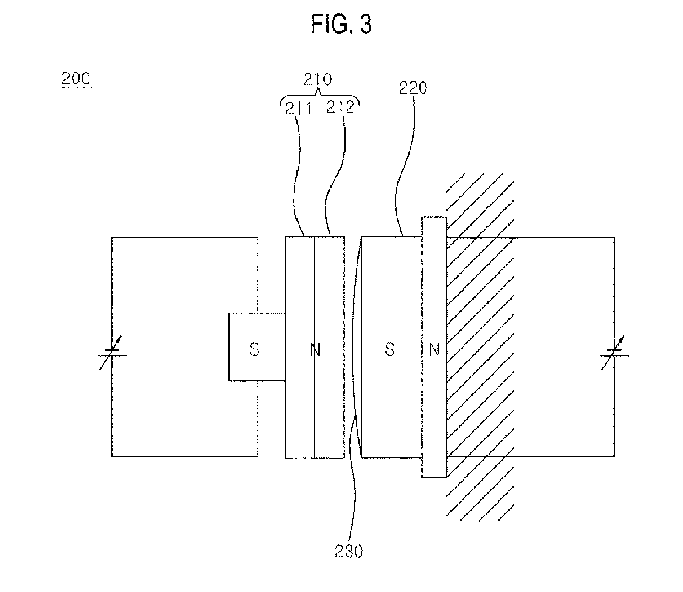

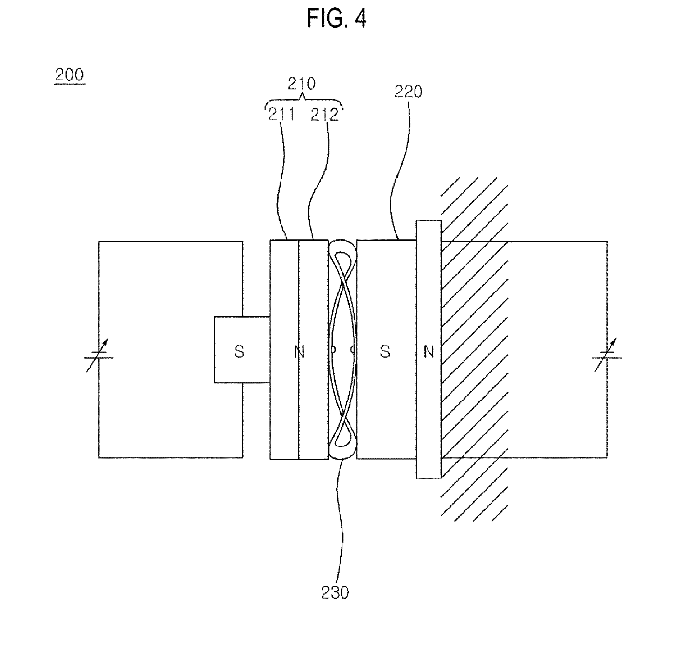

Referring to **FIGS. 3** and **4****,** a magnetic brake according to a second embodiment of the present invention is explained.

**FIG. 3** is a schematic diagram of a magnetic brake according to a second embodiment of the present invention and **FIG. 4** is another schematic diagram of a magnetic brake according to a second embodiment of the present invention.

A magnetic brake according to an embodiment of the present invention is substantially the same as the first embodiment of the present invention except for some details of a disk portion, therefore, detailed explanation of other elements except for the disk portion are skipped.

Referring to **FIGS. 3** and **4****,** a disk portion 210 of a magnetic brake 200 according to a second embodiment of the present invention is installed on a rotating body to rotate in connection with the rotating body (not shown). The disk portion 210 of the magnetic brake 200 according to an embodiment of the present invention may be an electromagnet capable of adjusting a voltage such as the pad portion 120 of the magnetic brake 100 according to the first embodiment of the present invention. In other words, the disk portion 210 and the pad portion 220 of the magnetic brake 200 according to an embodiment of the present invention may be an electromagnet capable of adjusting a voltage. For example, the disk portion 210 formed by the electromagnet is capable of adjusting an applied voltage from 5V to 10V and, a frictional force generated between the disk portion 210 and the pad portion 220 may be adjusted through adjusting a voltage of the disk portion 210 and the pad portion 220.

Herein, it may be preferable to slidingly install the disk portion 210 to the rotating body such that the disk portion 210 is moved to the pad portion 220 according to the rotating body and gets in contact with the pad portion 220.

Meanwhile, the disk portion 210 may be arranged to the pad portion 220 such that different polarities face to each other, and therefore, an attraction is generated between the disk portion 210 and the pad portion 220 when a voltage is applied to the disk portion 210 and the pad portion 220. For example, when an S-polarity of the pad portion 220 is positioned to the left and then, an N-polarity of the pad portion 220 is positioned to the right as shown in **FIG. 3****,** it may preferable to arrange an N-polarity of the disk portion 210 to the right which faces the left of the pad portion 220. Meanwhile, when the N-polarity is positioned to the left and then, the S- polarity is positioned to the right as shown in **FIG. 4****,** it may be preferable to arrange the S-polarity of the disk portion 210 to the right which faces the left of the pad portion 220.

Meanwhile, the disk portion 210 includes a disk 211 slidingly installed on the rotating body to an axial direction of the rotating body, and a disk pad 212 installed on the disk 211 to face the pad portion 220. Herein, it may be preferable to replaceably install the disk pad 212 on the disk 211 to replace when the disk pad 212 is worn down after using predetermined period.

Referring again to **FIGS. 3** and **4****,** an operating process and an operating effect of a magnetic brake according to the second embodiment of the present invention are explained below.

Referring to **FIGS. 3** and **4****,** a voltage is applied to the pad portion 220 and the disk portion 210 formed in electromagnets in order to stop a rotating body (not shown) by using the magnetic brake 200 according to the second embodiment of the present invention.

When a voltage is applied to the pad portion 220 and the disk portion 210, an attraction is generated between the pad portion 220 and the disk portion 210 since opposite polarities of the pad portion 220 and the disk portion 210 face each other, and the disk portion 210 disposed away from the pad portion 220 at a predetermined interval is slidingly moved to the pad portion 220 according to the rotating body.

In the beginning, a partial portion of the buffer means 230 installed on the pad portion 220 or the disk portion 210 gets in contact with the disk portion 210 or the pad portion 220 when the disk portion 210 is slidingly moved to a predetermined distance toward the pad portion 220 according to the rotating body.

After, when the disk portion 210 is further moved to the pad portion by the generated attraction, a shape of the buffer means 230 is changed since it is pressed by the pad portion 220 and the disk portion 210, a contact surface between the buffer means 230 and the disk portion 210 or the pad portion 220 is gradually increased, a frictional force generated between the pad portion 220 and the disk portion 210 is gradually increased, thus, it is possible to stop smoothly the whole rotating body by reducing gradually a rotating speed of the rotating body and minimizing a braking impact.

### < Third embodiment>

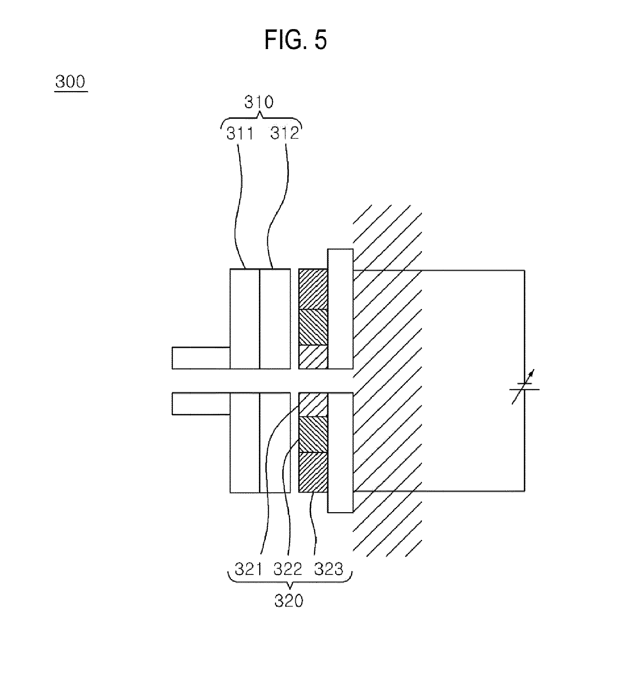

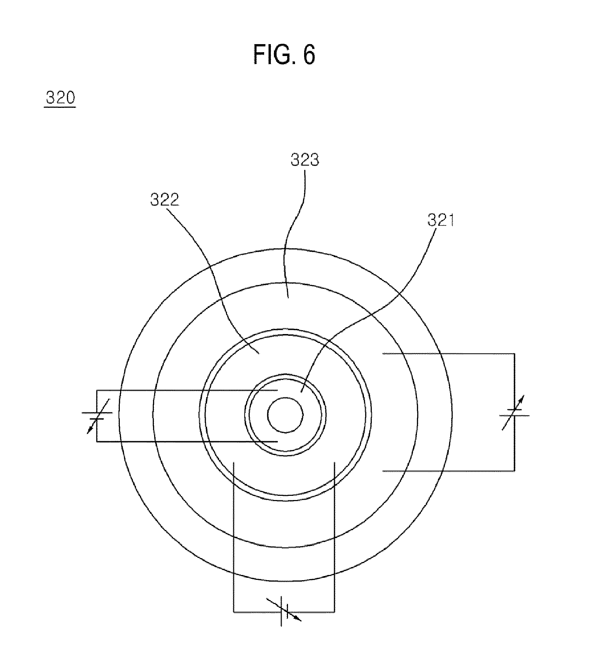

Referring to **FIGS. 5** and **6****,** a magnetic brake according to a third embodiment of the present invention is explained.

**FIG. 5** is a schematic diagram of a magnetic brake according to a third embodiment of the present invention, and **FIG. 6** is a front view explaining a pad structure.

A magnetic brake according to an embodiment of the present invention is substantially the same as the first embodiment of the present invention except for some details of a pad portion, detailed explanation of other elements except for the pad portion are skipped, and the same reference numerals are used for the components to the embodiments which are same/similar to the first embodiment. Meanwhile, the embodiment may not include a buffer means described in the first embodiment.

Referring to **FIG. 3****,** in a pad portion 320 of a magnetic brake 300 according to the third embodiment of the present invention, at least two electromagnets 321, 322 and 323 which are capable of independently adjusting a voltage are formed and arranged forming a concentric circle. Also, the pad portion 320 is disposed away from the disk portion 310 at a predetermined interval. Herein, a voltage is applied at a predetermined interval to each of the electromagnets 321, 322 and 323 which forms the pad portion 320, each of the electromagnets 321, 322 and 323 gradually gets in contact with the disk portion 310 at a predetermined interval, a frictional force between the pad portion 320 and the disk portion 310 is gradually increased, and therefore, it is possible to smoothly stop the rotating body (not shown).

For example, a first electromagnet 321 may be arranged in a center of the pad portion 320, a second electromagnet 322 may be arranged outside of the first electromagnet 321 forming a concentric circle with the first electromagnet 321, and a third electromagnet 323 may be arranged outside of the second electromagnet 322 forming a concentric circle with the first and second electromagnet 321, 322.

As described above, a voltage is applied with a predetermined interval from the first electromagnet to the third electromagnet 321, 322 and 323 which are arranged from a center to the outside of the pad portion 320, the first to the third electromagnets 321, 322 and 323 are gradually get in contact with the disk portion 310, a contact surface with the disk portion 310 is gradually increased, and therefore it is capable of smoothly stopping the rotating body by gradually increasing a frictional force between the pad portion 320 and the disk portion 310.

For example, first a voltage is applied to the first electromagnet 321 of the pad portion 320, after a predetermined interval, a voltage is applied to the second electromagnet 322, and after, a voltage is applied to the third electromagnet 323, from the first to the third electromagnets 321, 322 and 323 get in contact with the disk portion 310 sequentially at a predetermined interval, and a frictional force between the disk portion 310 and the pad portion 320 is gradually increased by gradually increasing a contact surface between the pad portion 320 and the disk portion 310.

Alternatively, first, a voltage is applied to the third electromagnet 323 of the pad portion 320, after a predetermined interval, a voltage is applied to the second electromagnet 322, and after, a voltage is applied to the first electromagnet 321, from the third to the first electromagnets 323, 322 and 321 get in contact with the disk portion 310 sequentially at a predetermined interval, and a frictional force between the disk portion 310 and the pad portion 320 is gradually increased by gradually increasing a contact surface between the pad portion 320 and the disk portion 310.

Meanwhile, different voltage may be applied to each of the first to third electromagnets 321, 322 and 323 of the pad portion 320.

For example, a voltage may be applied which is gradually increased from the first electromagnet 321 positioned in a center of the pad portion 320 to the third electromagnets 323 positioned in the outermost of the pad portion 320. In other words, when 5V is applied to the first electromagnet 321, 10V is applied to the second electromagnet 322, and 15V is applied to the third electromagnet 323.

Alternatively, a voltage may be applied whith is gradually increased from the third electromagnet 323 positioned in the outermost of the pad portion 320 to the first electromagnets 321 positioned in a center of the pad portion 320. In other words, when 5V is applied to the third electromagnet 323, 10V is applied to the second electromagnet 322, and 15V is applied to the first electromagnet 321.

That is, a lowest voltage is applied to the electromagnet which gets in contact with the disk portion 310 at first, and the biggest voltage is applied to the electromagnet which gets in contact with the disk portion 310 at the end among the first to third electromagnets 321, 322 and 323.

Referring again to **FIGS. 5** and **6****,** an operating process and an operating effect of a magnetic brake according to the second embodiment of the present invention are explained in below.

Referring to **FIGS. 5** and **6****,** a voltage is applied to the first electromagnet 321 of the pad portion 320 in order to stop a rotating body (not shown) by using the magnetic brake 300 according to the second embodiment of the present invention.

When a voltage is applied to the first electromagnet 321, an attraction is generated in the pad portion 320 and, the disk portion 310 disposed away at a predetermined interval from the pad portion 320 is towed and slidingly moved to the pad portion 320 according to the rotating body.

Herein, the first electromagnet 321 gets completely in contact with the disk portion 310 and the second and third electromagnets 322 and 323 remain just touched state and not contacted.

As described above, when only the first electromagnet 321 remains in contact state with the disk portion 310, a rotating power of the rotating body is reduced below a certain speed since a frictional force is generated between the first electromagnet and the disk portion 310.

After, a voltage is applied to the second electromagnet 322, not only the first electromagnet 321 but also the second electromagnet 322 gets in contact state, and the rotation power of the rotating body is further reduced since the frictional force between the pad portion 320 and the disk portion 310 is increased.

A voltage is applied to the third electromagnet 323 after the first and second electromagnets 321 and 322 are remained in contact with the disk portion 310 in a certain time as described above, the rotating body is stopped by increasing the frictional force generated between the pad portion 320 and the disk portion 310 through maintaining in contact state the all electromagnets from the first to third electromagnets 321, 322 and 323 with the disk portion 310.

Meanwhile, in case that the third electromagnet 323 gets in contact with the disk portion 310 at first, detailed explanation is omitted since it is same as the case when the first electromagnet 321 gets in contact with the disk portion 310 at first except for the contact sequence of the first to third electromagnets 321, 322 and 323.

As described above, a voltage is applied to each of the electromagnets 321, 322 and 323 which form the pad portion 320 at a predetermined interval, each of the electromagnets 321, 322 and 323 gradually gets in contact with the disk portion 310 at a predetermined interval, and therefore, a magnetic brake 300 according to the third embodiment of the present invention has an advantage that the rotating body is smoothly stopped since a rotating speed of the rotating body is gradually reduces by increasing a frictional force between the disk portion 310 and the pad portion 320.

As described above, a magnetic brake according to the third embodiment of the present invention gradually increases a contact surface between the pad portion and the disk portion through a very simple structured buffer means and a frictional force generated between the pad portion and the disk portion is gradually increased, or gradually increases a frictional force between the pad portion and the disk portion through forming a pad portion without additional component in which least two electromagnets are arranged to form a concentric circle and a voltage is applied to each of the electromagnets in a certain interval such that each of the electromagnets gradually gets in contact with the disk portion in a certain interval.

Therefore, a magnetic brake according to the embodiment of the present invention is usefully applied to a joint portion of an industrial robot arm which requires precise controlling or a robot arm for surgery which requires more precise controlling since it minimizes a braking impact applied to a rotating body and smoothly stops the rotating body.

Also, a magnetic brake according to the embodiment of the present invention is manufactured in a simple and compact structure, and a restriction of installing space is minimized even though it is capable of stopping precisely a rotating body, and therefore, various devices in which the magnetic brake is applied may be smaller and lighter.

It will be apparent to those skilled in the art that various modifications and variation can be made in the present invention without departing from the scope of the invention. Thus, it is intended that the present invention cover the modifications and variations of this invention provided they come within the scope of the appended claims and their equivalents.

## Claims

1. A magnetic brake comprising:
a disk portion installed on a rotating body to rotate in connection with the rotating body;
a pad portion disposed away from the disk portion at a predetermined interval, formed by an electromagnet, capable of adjusting a voltage and stopping the rotating body by a frictional force that is generated by towing the disk portion and getting in contact with the disk portion when the voltage is applied; and
a buffer means smoothly stopping the rotating body by gradually increasing a contact surface between the pad portion and the disk portion when the disk portion and pad portion get in contact and gradually increasing the frictional force between the disk portion and the pad portion.

2. The magnetic brake of claim 1, wherein the buffer means is a buffer pad with an arc shape which is installed on the disk portion or the pad portion, and the contact surface is gradually and outwardly increased from a center portion when the disk portion and the pad portion get in contact.

3. The magnetic brake of claim 1, wherein the buffer means is a leaf spring which is elastically interposed between the disk portion and the pad portion, and the contact surface is gradually increased by pressing the leaf spring through the disk portion and the pad portion when the disk portion and the pad portion get in contact.

4. The magnetic brake of claim 1, wherein the disk portion is formed by an electromagnet capable of adjusting a voltage, wherein the disk portion is arranged to face the pad portion and the disk portion has an opposite polarity to a polarity of the pad portion.

5. A magnetic brake comprising:
a disk portion installed on a rotating body to rotate in connection with the rotating body; and
a pad portion, wherein the pad portion includes:
at least two electromagnets arranged to form a concentric circle and capable of independently adjusting a voltage, and disposed away from the disk portion at a predetermined interval to smoothly stop the rotating body by gradually increasing a frictional force between the pad portion and the disk portion, wherein a voltage is applied to each of the electromagnets at a predetermined interval and each of the electromagnets gradually gets in contact with the disk portion at a predetermined interval.

6. The magnetic brake of claim 5, wherein a voltage is gradually applied to the pad portion from the electromagnet positioned in a center of the pad portion to the electromagnet positioned in the outermost of the pad portion such that the electromagnets gradually get in contact with the disk portion from the center of the pad portion to the outermost of the pad portion.

7. The magnetic brake of claim 5, wherein a voltage is gradually applied to the pad portion from the electromagnet positioned in the outermost of the pad portion to the electromagnet positioned in a center of the pad portion such that the electromagnets gradually get in contact with the disk portion from the outermost of the pad portion to the center of the pad portion.

8. The magnetic brake of claim 5, wherein different voltage is applied to each of the electromagnets which form the pad portion.

9. The magnetic brake of claim 8, wherein the voltages applied to the electromagnets are gradually increased from the electromagnet positioned in a center of the pad portion to the electromagnet positioned in the outermost of the pad portion.

10. The magnetic brake of claim 8, wherein the voltages applied to the electromagnets are gradually increased from the electromagnet positioned in the outermost of the pad portion to the electromagnet positioned in a center of the pad portion.
